**Europäisches Patentamt**

**European Patent Office**

**Office européen des brevets**

(19)

(11) Veröffentlichungsnummer: **0 160 977**
**B1**

(12)

# EUROPÄISCHE PATENTSCHRIFT

(45) Veröffentlichungstag der Patentschrift:
06.12.89

(51) Int. Cl.⁴: **B 65 D 77/20**

(21) Anmeldenummer: **85105606.9**

(22) Anmeldetag: **07.05.85**

(54) **Sterilisierbarer, mit aluminium-verbundfolie verschlossener glasbehälter.**

(30) Priorität: **07.05.84  DE 3416754**

(43) Veröffentlichungstag der Anmeldung:
**13.11.85 Patentblatt 85/46**

(45) Bekanntmachung des Hinweises auf die Patenterteilung:
**06.12.89 Patentblatt 89/49**

(84) Benannte Vertragsstaaten:
**CH DE FR GB IT LI**

(56) Entgegenhaltungen:
**EP-A-0 011 588**
**GB-A-1 134 433**
**GB-A-1 454 569**

(73) Patentinhaber: **Nyffeler, Corti AG, CH- 3422 Kirchberg BE (CH)**

(72) Erfinder: **Lamping, Alfons, Dr., route de Combarod 5, CH- 1711 Corminboeuf (CH)**
Erfinder: **Karth, Beat, Erlenweg 16, CH- 3363 Oberönz (CH)**

(74) Vertreter: **Barz, Peter, Dr., Patentanwälte Dr. V. Schmied- Kowarzik Dipl.- Ing. G. Dannenberg Dr. P. Weinhold Dr. D. Gudel Dipl.- Ing. S. Schubert Dr. P. Barz Siegfriedstrasse 8, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen sterilisierbaren, mit Aluminium-Verbundfolie verschlossenen Glasbehälter und ein Verfahren zu seiner Herstellung.

Die Heißversiegelung von Glasbehältern gewinnt zunehmendes Interesse, da sie die fortschrittliche Verpackungstechnologie des Heißsiegelns mit den Vorteilen des Verpackungsmaterials Glas (Transparenz etc.) verbindet. Allerdings ständ bisher noch kein Glasversiegelungssystem zur Verfügung, das eine Sterilisierung der durch Heißsiegeln verschlossenen Glasbehälter ermöglicht hätte, da herkömmliche Heißsiegelmedien den bei der Sterilisation angewandten Temperaturen nicht standhalten.

In der GB-A-1 454 569 werden Behälter aus Glas oder Keramik dadurch verschlossen, daß man den Behälterrand mit einem Überzug aus gehärtetem, duroplastischem Harz versieht und eine Verschlußmembran aufsiegelt, die eine thermoplastische Beschichtung aufweist.

Auf dem Gebiet der Einbrennlackierungen sind Lacksysteme bekannt, die eine ausgezeichnete Haftung auf Metalloberflächen besitzen und für lebensmitteltechnologische Anwendungen geeignet sind. Zu diesen Lacksystemen zählen Polypropylen-Organosole und Lacke für das Coil-Coating oder die Doseninnenlackierung.

Überraschenderweise wurde nun gefunden, daß Einbrennlacke dieser Art nicht nur auf Metallen, sondern auch sehr gut auf Glas haften. Dies war vor allem deshalb nicht zu erwarten, weil die Glasoberfläche aufgrund der Anwesenheit von hydrophilen Gruppen stets mit einer Feuchtigkeitshaut überzogen ist. Ferner bestand die Gefahr, daß die Grenzfläche Glas/Lack bei der Wasserdampf-Sterilisation durch Wassermoleküle unterwandert wird und eine Abschälung der organischen Beschichtung von der Glasoberfläche erfolgt. Entgegen diesen Befürchtungen hat sich erfindungsgemäß gezeigt, daß beim Heißsiegeln einer Aluminium/Polypropylen-Verbundfolie auf den mit einer Einbrennlackierung versehenen Rand eines Glasbehälters eine feste und darüber hinaus sterilisationsbeständige Verbindung erzielt wird. Es ist somit erstmals möglich, heißgesiegelte Glaskonserven herzustellen.

Gegenstand der Erfindung ist ein sterilisierbarer, mit Aluminium-Verbundfolie verschlossener Glasbehälter, der dadurch gekennzeichnet ist, daß der Rand des Glasbehälters mit einer thermoplastischen Einbrennlackierung versehen ist, auf die eine Aluminium/Polypropylen-Verbundfolie als Verschlußmembran aufgesiegelt ist.

Erfindungsgemäß bevorzugte Einbrennlacke sind Polypropylen-Organsole d.h. Dispersionen von Polypropylen in höhersiedenden Kohlenwasserstoffen, wie sie unter der Bezeichnung MOR-PRIME® von der Firma Morton Chemical vertrieben werden, und thermoplastische Coil-Coating-Lacke auf Epoxidharzbasis. Besonders bevorzugt sind Mischungen aus diesen PolypropylenOrganosolen und thermoplastischen Coil-Coating-Lacken auf Epoxidharzbasis. Die Polypropylen-Komponente dieser Mischungen bewirkt, daß die Erweichungstemperatur der Lackmischung höher liegt (bei ca. 150 bis 160°C) als die übliche Sterilisationstemperatur (ca. 121°C).

Diese Einbrennlacke werden bei relativ hohen Temperaturen (ca. 250°C) getrocknet, wobei sie gleichzeitig chemisch vernetzen. Die Vernetzung verläuft hierbei so, daß der trokkene Lackfilm noch thermoplastische Eigenschaften aufweist und gegen sich selbst oder chemisch ähnliche Materialien heißsiegelbar ist. Siegelt man daher auf den Lackfilm eine herkömmliche Aluminium/Polypropylen-Verbundfolie auf, wobei die Polypropylenschicht dem Lackfilm zugewandt ist, so entsteht eine mechanisch und thermisch stabile Heißsiegelverbindung.

Vor dem Aufbringen der Einbrennlackierung kann der zu versiegelnde Glasrand gegebenenfalls mit einem Haftvermittler, z. B. einem Silan wie Vinyltriethoxysilan oder -Glycidoxy-propyltrimethoxysilan oder einem Titansäureester wie Tetrapropyltitanat oder Tetrabutyltitanat, vorbehandelt werden, um die Haftung zu verbessern.

Der auf diese Weise hergestellte sterilisierbare, mit einer Aluminium/Polypropylen-Verbundfolie verschlossene Glasbehälter kann z. B. 30 Minuten bei 121°C in einem Gegendruck-Autoklaven sterilisiert werden.

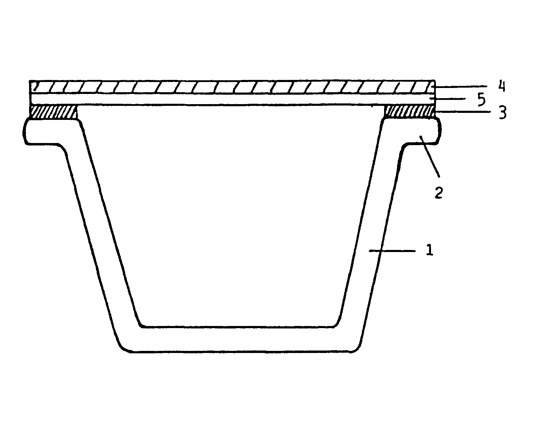

In der Zeichnung ist schematisch eine Ausführungsform eines erfindungsgemäßen Glasbehälters 1 dargestellt, der auf dem Rand 2 eine Einbrennlackierung 3 aufweist, auf die eine Verbundfolie aus einer Aluminiumschicht 4 und einer Polypropylenschicht 5 aufgesiegelt ist.

## Patentansprüche

1. Sterilisierbarer, mit Aluminium-Verbundfolie verschlossener Glasbehälter, *dadurch gekennzeichnet*, daß der Rand des Glasbehälters mit einer thermoplastischen Einbrennlackierung versehen ist, auf die eine Aluminium/Polypropylen-Verbundfolie als Verschlußmembran aufgesiegelt ist.

2. Glasbehälter nach Anspruch 1, *dadurch gekennzeichnet*, daß die Einbrennlackierung aus einem Polypropylen-Organosol oder einem thermoplastischen Coil-Coating-Lack auf Epoxidharzbasis besteht.

3. Glasbehälter nach Anspruch 1, *dadurch gekennzeichnet*, daß die Einbrennlackierung aus einer Mischung aus einem Polypropylen-Organosol und einem thermoplastischen Coil-Coating-Lack auf Epoxidharzbasis besteht.

4. Glasbehälter nach einem der Ansprüche 1 bis 3, *dadurch gekennzeichnet*, daß der Glasrand mit einem Haftvermittler vorbehandelt worden ist.

5. Glasbehälter nach Anspruch 4, *dadurch gekennzeichnet*, daß der Haftvermittler ein Silan oder ein Titansäureester ist.

6. Verfahren zur Herstellung eines sterilisierbaren, mit Aluminium-Verbundfolie verschlossenen Glasbehälters, *dadurch gekennzeichnet, daß* man den zu verschließenden Rand des Glasbehälters mit einer Einbrennlackierung versieht und den lackierten Behälterrand durch Heißsiegeln mit einer Aluminium/Polypropylen-Verbundfolie verschließt.

7. Verfahren nach Anspruch 6, *dadurch gekennzeichnet, daß* man als Einbrennlackierung ein Polypropylen-Organosol oder einen thermoplastischen Coil-Coating-Lack auf Epoxidharzbasis verwendet.

8. Verfahren nach Anspruch, 6, *dadurch gekennzeichnet, daß* man als Einbrennlackierung eine Mischung aus einem Polypropylen-Organosol und einem thermoplastischen Coil-Coating-Lack auf Epoxidharzbasis verwendet.

9. Verfahren nach einem der Ansprüche 6 bis 8, *dadurch gekennzeichnet, daß* man den Rand des Glasbehälters vor dem Aufbringen der Einbrennlackierung mit einem Haftvermittler behandelt.

10. Verfahren nach Anspruch 9, *dadurch gekennzeichnet, daß* man als Haftvermittler ein Silan oder einen Titansäureester verwendet.

**Claims**

1. A sterilizable glass container sealed with an. aluminium composite sheet which comprises, as a closing membrane, an aluminium/polypropylene composite sheet sealed onto a thermoplastic coating consisting of a baking varnish provided on the rim of the glass container.

2. A glass container as claimed in claim 1 wherein said baking varnish comprises a polypropylene organosol or a thermoplastic coil-coating epoxy varnish.

3. A glass container as claimed in claim 1 wherein said baking varnish consists of a mixture of a polypropylene organosol and a thermoplastic coil-coating epoxy varnish.

4. A glass container as claimed in any one of claims 1 to 3 wherein the rim of the glass has been pretreated with an adhesion promotor.

5. A glass container as claimed in claim 4 wherein the adhesion promotor is a silane or a titanate.

6. A process for the production of a sterilizable glass container sealed with an aluminium composite sheet wherein the rim of the glass container to be closed is provided with a baking varnish coating and the coated rim of the container is closed by heatsealing with an aluminium/polypropylene composite sheet.

7. A process as claimed in claim 6 wherein a polypropanol organosol or a thermoplastic coil-coating epoxy varnish are used as baking varnish.

8. A process as claimed in claim 6 wherein a mixture of a polypropylene organosol and a thermoplastic coilcoating epoxy varnish is used as baking varnish.

9. A process as claimed in any one of claims 6 to 8 wherein the rim of the glass container is preatreated with an adhesion promotor prior to applying the baking varnish.

10. A process as claimed in claim 9 wherein a silane or a titanate is used as adhesion promotor.

**Revendications**

1. Récipient en verre stérilisable, fermé par une feuille d'aluminium composite, *caractérisé en ce que* le bord du récipient en verre est muni d'un vernis à cuire thermoplastique, sur lequel une feuille composite d'aluminium/polypropylène formant membrane de fermeture est scellée.

2. Récipient en verre selon la revendication 1, *caractérisé en ce que* le vernis à cuire est constitué par un polypropylène-organosol ou un vernis Coil-Coating thermoplastique à base de résine époxy.

3. Récipient en verre selon la revendication 1, *caractérisé en ce que* le vernis à cuire est constitué par un mélange d'un polypropylène-organosol et d'un revêtement d'enroulement thermoplastique à base de résine époxy.

4. Récipient en verre selon l'une des revendications 1 à 3, *caractérisé en ce que* le bord du verre a été préalablement traité avec un agent adhésif.

5. Récipient en verre selon la revendication 4, *caractérisé en ce que* l'agent adhésif est un silane ou un ester de l'acide titanique.

6. Procédé pour fabriquer un récipient en verre stérilisable, fermé par une feuille composite d'aluminium, *caractérisé en ce qu'*on applique un vernis à cuire sur le bord, devant être fermé, du récipient en verre et qu'on ferme le bord verni du récipient par scellement à chaud au moyen d'une feuille composite d'aluminium/polypropylène.

7. Procédé selon la revendication 6, *caractérisé en ce qu'*on utilise comme vernis à cuire un polypropyléne-organosol ou un revêtement d' enroulement thermoplastique à base de résine époxy

8. Procédé selon la revendication 6, *caractérisé en ce qu'*on utilise comme vernis à cuire un mélange forme d'un polypropylène-organosol et d'un revêtement d'enroulement thermoplastique à base de résine époxy.

9. Procédé selon l'une des revendications 6 à 8, *caractérisé en ce qu'*on traite le bord du récipient en verre avec un agent adhésif avant le dépôt du vernis à cuire.

10. Procédé selon la revendication 9, *caractérisé en ce qu'*on utilise comme agent adhésif un silane ou un ester de l'acide titanique.